# EUROPÄISCHE PATENTSCHRIFT

(11) **EP 3 932 777 B1**
(45) Veröffentlichungstag und Bekanntmachung des Hinweises auf die Patenterteilung: **07.08.2024**
(21) Anmeldenummer: 21172396.0
(22) Anmeldetag: 06.05.2021
(51) Int. Cl.: B62D 5/04

(54) **ENDANSCHLAGS-RÜCKSTELLFUNKTION FÜR EINE FAHRZEUGLENKUNG**
END STOP RESET FUNCTION FOR VEHICLE STEERING
FONCTION DE RAPPEL DE FIN DE COURSE POUR UNE DIRECTION DE VÉHICULE

(30) Priorität: 01.07.2020 DE 102020208261
(43) Veröffentlichungstag der Anmeldung: 05.01.2022
(73) Patentinhaber: VOLKSWAGEN AG, 38440 Wolfsburg (DE)
(72) Erfinder: Neef, Barbara, 38518 Gifhorn (DE); Berkner, Stefan, 38518 Gifhorn (DE); Zientek, Jens, 39365 Sommersdorf (DE)

(56) Entgegenhaltungen:
- US-A1- 2017 203 784
- US-A1- 2018 281 851
- US-A1- 2019 270 482

## Beschreibung

Die Erfindung betrifft ein Verfahren und ein Steuergerät zum Ansteuern eines Fahrzeuglenkaktors mittels einer Endanschlags-Rückstellfunktion. Insbesondere betrifft die Erfindung das Gebiet der Fahrzeugtechnik und ferner insbesondere der Kraftfahrzeugtechnik. Insbesondere richtet sich die Erfindung auf Kraftfahrzeuge, wie Personenwagen oder Lastkraftwagen.

Es ist bekannt, bei Lenksystemen, die aktorische Lenkkräfte erzeugen, sogenannte Rückstellfunktionen vorzusehen. Diese haben allgemein die Aufgabe, ein Lenkgetriebe in eine vorbestimmte Position zurückzustellen. Diese Position entspricht typischerweise einer Geradeausfahrt. Derartige Rückstellfunktionen sind typischerweise in einem Steuergerät einer Fahrzeuglenkung vorgesehen und ermitteln vorzugsweise fortlaufend Steuergrößen für einen Fahrzeuglenkaktor (insbesondere einen Elektromotor oder allgemein Servomotor). Der Fahrzeuglenkaktor kann auch von anderen Funktionen Steuergrößen erhalten und aus den insgesamt erhaltenen Steuergrößen eine von ihm aufzubringende Kraft bestimmen. Die Funktionen, die Steuergrößen an den Fahrzeuglenkaktor übermitteln, sind typischerweise für ihre jeweiligen Aufgaben (beispielsweise das Erzeugen von Rückstellkräften) optimiert, insbesondere hinsichtlich einzuhaltender Sicherheitsgrenzen, einem vom Fahrer wahrnehmbaren Lenkgefühl oder den Wechselwirkungen mit anderen Funktionen.

Es ist ferner bekannt, dass Fahrzeuglenkungen und insbesondere Lenkgetriebe sogenannte Endanschläge aufweisen. Hierbei kann es sich um einen mechanischen Endanschlag handeln, der eine maximale Auslenkung oder, mit anderen Worten, einen maximalen Lenkwinkel der Lenkung in beide Richtungen (nach links Lenken und nach rechts Lenken) begrenzt. Ebenso bekannt sind aber sogenannte Software-Endanschläge. Diese definieren typischerweise eine Bewegungsgrenze des Lenkgetriebes und insbesondere einer etwaigen Zahnstange oder anderer auslenkbarer Getriebeglieder, ab deren Überschreitung fahrerautonome Kräfte erzeugt werden, die ein weiteres Auslenken in Richtung des mechanischen Endanschlags erschweren.

Beispielsweise existieren Software-Endanschläge als Funktionen eines Steuergeräts, die in einer gewissen Distanz vor dem mechanischen Endanschlag Steuergrößen an den Fahrzeuglenkaktor ausgeben. Darauf basierend kann dieser Kräfte erzeugen, die entgegen einer vom Fahrer aufgebrachten Kraft wirken, also ein weiteres Verlagern in Richtung des mechanischen Endanschlags verhindern.

Auch nahe eines (mechanischen oder Software-) Endanschlags der Lenkung ist es gewünscht, die geschilderte Rückstellfunktion bereitzustellen, beispielsweise um ein gewohntes Lenkgefühl für den Fahrer sicherzustellen. Es hat sich jedoch gezeigt, dass speziell nahe des Endanschlags bei bestimmten Achs- und/oder Lenkungskonfigurationen erhöhte lenkwirksame Kräfte auftreten. Diese können von herkömmlichen Rückstellfunktionen zum Erzeugen einer rückstellenden Wirkung nicht ohne Weiteres überwindbar sein. Anders ausgedrückt ist es bei bestimmten Lenkungs- und/oder Achskonfigurationen möglich, dass insbesondere bei geringen Fahrgeschwindigkeiten und großen Lenkwinkeln (also insbesondere im Rahmen von Rangier- oder Parkvorgängen) herkömmliche Rückstellfunktionen keine ausreichende rückstellende Wirkung mehr entfalten. In diesen Betriebszuständen kann die Lenkung vom Fahrer als unnatürlich und schwergängig empfunden werden.

Prinzipiell besteht die Möglichkeit, derartige Betriebszustände zu identifizieren und dort (also im Bereich eines mechanischen und/oder Software-Endanschlags der Lenkung) mit einer herkömmlichen Rückstellfunktion auf den Bereich des Endanschlags begrenzt erhöhte Rückstellkräfte zu erzeugen. Beispielsweise offenbart die US 2019/0344823 A1 eine Lösung, bei der eine Rückstellkraft geschwindigkeitsabhängig insbesondere nahe eines Endanschlags anpassbar ist, wobei auf den Fall abgestellt wird, dass ein Fahrzeug aus dem Stillstand anfährt. In diesem Fall soll eine anfängliche Zunahme der Rückstellkraft gegenüber anschließenden Beschleunigungen geringer ausfallen, um einen sprunghaften Anstieg der Rückstellkräfte und damit einhergehende Verfälschungen des Lenkgefühls zu vermeiden.

Die US 10 214 234 B2 offenbart in ähnlicher Weise, Verstärkungsfaktoren einer Rückstellfunktion geschwindigkeitsabhängig anzupassen.

Derartigen Lösungen ist gemein, dass eine auch abseits des Endanschlags verwendete Rückstellfunktion sozusagen lokal im Bereich des Endanschlags verändert wird, um auf dort gegebene Besonderheiten zu reagieren. Dies erfordert jedoch umfassende Anpassungen an die Besonderheiten eines konkreten Lenkgetriebes im Bereich seines Endanschlags. Neben dem damit einhergehenden Entwicklungsaufwand ist folglich auch die Übertragbarkeit auf andere Lenkungen bzw. Lenkgetriebe unter Umständen beeinträchtigt.

Weiter ist es nicht trivial, eine über den gesamten Lenkbereich verwendete Rückstellfunktion im Bereich eines Endanschlags gesondert anzupassen, wenn Wechselwirkungen mit anderen Lenkfunktionen zu berücksichtigen sind. Auch sind Nichtlinearitäten zu beachten, da der Fahrer sowohl im Endanschlag als auch beim Auslenken aus einer Neutralstellung üblicherweise maximale Handmomente aufbringt. Es liegt also keine lineare Zu- oder Abnahme des Handmoments über den Bewegungsbereich des Lenkgetriebes vor. Auch dies erschwert es, eine Rückstellfunktion für den gesamten Bewegungsbereich eines Lenkgetriebes geeignet einzustellen.

Eine weitere in der Praxis verwendete Lösung besteht darin, den vorstehend genannten Software-Endanschlag anzupassen. Für die geschilderten Lenkungen, die im Endanschlagsbereich eine Rückstellung erschweren, kann dieser derart angepasst werden, dass dessen gegen den Fahrer wirkende Kräfte höher ausfallen und somit rückstellend wirken und/oder näher an dem Bereich des tatsächlichen mechanischen Endanschlages erzeugt werden. Auch hier hat sich aber gezeigt, dass dies unter Berücksichtigung eines einzuhaltenden Lenkgefühls sowie bei Nichtlinearitäten und Wechselwirkungen mit anderen Funktionen nicht ohne weiteres möglich ist.

Aus der US 2019/270482 A1 sowie der US 2017/203784 A1 sind jeweils gattungsgemäße Verfahren zum Ansteuern eines Fahrzeuglenkaktors bekannt.

Aus der US 2018/0281851 A1 ist ein Verfahren zum Ansteuern eines Fahrzeuglenkaktors bekannt, wobei eine Endanschlags-Rückstellfunktion und eine Normalbetriebs-Rückstellfunktion vorgesehen sind.

Es besteht somit ein Bedarf dafür, das Ansteuern insbesondere eines Fahrzeuglenkaktors auch im Bereich der Endanschläge einer Fahrzeuglenkung zu verbessern hinsichtlich eines sich einstellenden Lenkgefühls und/oder einer Rückstellwirkung der Lenkung.

Diese Aufgabe wird durch die Gegenstände der beigefügten unabhängigen Ansprüche gelöst. Vorteilhafte Weiterbildungen sind in den Ansprüchen angegeben.

Die Erfindung sieht allgemein vor, zur Kompensation von im Endanschlagsbereich auftretenden überhöhten lenkwirksamen Kräften, die entgegen einer Rückstellung wirken, eine zusätzliche Rückstellfunktion vorzusehen. Diese lenkwirksamen Kräfte können z.B. von den Rädern auf das Lenkgetriebe übertragen werden. Diese Kompensations-Rückstellfunktion wird im Folgenden als Endanschlags-Rückstellfunktion bezeichnet. Ihr liegt der Gedanke zugrunde, dass diese Rückstellfunktion maßgeblich auf den Endanschlagsbereich begrenzt ist, d.h. bevorzugt nur dort zum Einsatz kommt. Vorzugsweise ist vorgesehen, dass diese Endanschlags-Rückstellfunktion zusätzlich zu einer ohnehin vorgesehenen Rückstellfunktion für den Normalbetrieb vorgesehen ist (im Folgenden Normalbetriebs-Rückstellfunktion). Anders ausgedrückt wird die Endanschlags-Rückstellfunktion speziell für das Erzeugen einer gewünschten rückstellenden Wirkung im Endanschlagsbereich ergänzt. Die Normalbetriebs-Rückstellfunktion kann hingegen in der gewohnten Weise über den gesamten Lenkbereich und vorzugsweise somit auch im Endanschlagsbereich parallel zu der Endanschlags-Rückstellfunktion betrieben werden.

Dies ermöglicht, dass die Normalbetriebs-Rückstellfunktion weniger umfangreich an eine Lenkung angepasst werden muss, die in Abweichung von herkömmlichen Lenktypen im Endanschlag-Bereich z.B. keine selbstausrichtende Wirkung besitzt. Insbesondere können also Normalbetriebs-Rückstellfunktionen existierender herkömmlicher Lenkgetriebe mit begrenzten Anpassungen verwendet werden und zum Kompensieren der mangelnden selbstausrichtenden Wirkung eines speziellen Lenkgetriebes kann zusätzlich die Endanschlags-Rückstellfunktion vorgesehen werden. Dies reduziert den Entwicklungsaufwand und insbesondere den Anpassungsaufwand der Normalbetriebs-Rückstellfunktion.

Weiter wird hierdurch ermöglicht, die Normalbetriebs-Rückstellfunktion für im Fahrbetrieb häufiger auftretenden Betriebszustände zu optimieren. Die Endanschlags-Rückstellfunktion ist hingegen lediglich für den speziellen und im Fahrzeugbetrieb eher selten auftretenden Betriebszustand des Lenkens nahe der Endanschläge und vorzugsweise auch bei lediglich geringen Fahrgeschwindigkeiten optimiert. Somit kann also eine definierte Aufgabentrennung der Rückstellfunktionen vorgesehen werden. Dies verbessert allgemein die Abstimmbarkeit der einzelnen Funktionen an die jeweils hierfür vorgesehenen Einsatzszenarien bzw. Betriebszustände und führt allgemein zu einer Entflechtung dieser Funktionen bzw. der unterschiedlichen Anforderungen hinsichtlich der bereitzustellenden Rückstellwirkungen im Bereich eines Endanschlags sowie außerhalb hiervon. Weiter ermöglicht dies einen verbesserten Umgang mit Nichtlinearitäten der vorstehend geschilderten Art. Weiter wird hierdurch die Sicherheit verbessert, da dann die unterschiedlichen Rückstellfunktionen gesondert und hinsichtlich der für sie jeweils einzuhaltenden Bedingungen oder Betriebsgrenzen überwachbar sind.

Vorgeschlagen wird ein Verfahren zum Ansteuern eines Fahrzeuglenkaktors (insbesondere eines Elektromotors und ferner insbesondere eines Servomotors), der mit einem Lenkgetriebe gekoppelt ist (beispielsweise über ein vom Aktor angetriebenes Ritzel oder einen Hebel hiermit in Eingriff steht), mit:
- Bereitstellen einer Endanschlags-Rückstellfunktion, mit der eine erste Steuergröße für den Fahrzeuglenkaktor ermittelbar ist, auf deren Basis zumindest anteilig und mit dem Fahrzeuglenkaktor eine Kraft erzeugbar ist, die das Lenkgetriebe in Richtung einer definierten Position bewegt;
- Ermitteln, ob das Lenkgetriebe (insbesondere eine optionale Zahnstange hiervon oder ein anderes bewegbares Getriebeglied) eine Grenzdistanz zu einem (bevorzugt mechanischen) Endanschlag unterschreitet;
und wenn dies der Fall ist:
- Ansteuern des Fahrzeuglenkaktors auf Basis der ersten Steuergröße, die einen Wert oberhalb eines Schwellenwerts aufweist;
wobei dann, wenn die Grenzdistanz nicht unterschritten wird, keine Steuergröße (insbesondere nicht die erste) mit der Endanschlags-Rückstellfunktion ermittelt wird, auf deren Basis mit dem Fahrzeuglenkaktor eine Kraft erzeugbar ist, die das Lenkgetriebe in eine definierte Position zurückstellt, oder lediglich eine Steuergröße mit einem den Schwellenwert nicht überschreitenden Wert.

Anders ausgedrückt kann lediglich bei Unterschreiten der Grenzdistanz mit der Endanschlags-Rückstellfunktion selektiv eine Steuergröße zum Erzeugen einer rückstellenden Wirkung erzeugt und ausgegeben werden. Außerhalb der Grenzdistanz bzw., wenn diese nicht unterschritten wird, erfolgt keine derartige Ermittlung und/oder Ausgabe einer Steuergröße. Es kann dann aber nach wie vor eine Steuergröße mit dem Wert von Null ausgegeben werden oder aber mit einem Wert unterhalb eines Schwellenwerts, wobei bevorzugt erst ab Überschreiten des Schwellenwerts eine rückstellende Wirkung erzielbar ist.

Die Endanschlags-Rückstellfunktion ist nicht beschränkt auf ein unmittelbares Arbeiten am Endanschlag. Stattdessen kann sie in einem definierten Winkelbereich zwischen Endanschlag und Grenzdistanz Rückstellkräfte oberhalb des Schwellenwerts erzeugen. Alternative könnte auch rein von einer Rückstellfunktion oder Kompensations-Rückstellfunktion gesprochen werden oder aber einer ersten Rückstellfunktion im Vergleich zu einer zweiten (Normalbetriebs-) Rückstellfunktion.

Das Lenkgetriebe kann eine Zahnstange umfassen. Die Erfindung ist aber nicht auf eine bestimmte Art von Lenkgetriebe beschränkt. Insbesondere kann sie auch bei Lenkgetrieben ohne Zahnstange eingesetzt werden und insbesondere bei Lenkgetrieben mit einem Kugelumlauf.

Prinzipiell kann vorgesehen sein, die Endanschlags-Rückstellfunktion lediglich selektiv zu aktivieren und/oder zuzuschalten, wenn die Grenzdistanz unterschritten wird. Vorzugsweise ist die Endanschlags-Rückstellfunktion jedoch dauerhaft aktiviert, erzeugt aber lediglich bei Unterschreiten der Grenzdistanz eine erste Steuergröße, mit der eine rückstellende Wirkung erzielbar ist und insbesondere nur bei Unterschreiten der Grenzdistanz einer Steuergröße mit einem von Null verschiedenen Wert. Anders ausgedrückt kann außerhalb der Grenzdistanz eine von der Endanschlags-Rückstellfunktion ausgegebene Steuergröße den Fahrzeuglenkaktor nicht dazu veranlassen, Kräfte zu erzeugen und/oder zumindest nicht solche Kräfte, mit der das Lenkgetriebe bewegbar ist oder aber mit der das Lenkgetriebe im Bereich des Endanschlags bewegbar ist.

Sämtliche hierin geschilderten Funktionen und insbesondere Rückstellfunktionen können als Softwarekomponenten eines Steuergeräts der Fahrzeuglenkung realisiert sein. Dieses kann Bewegungsgrößen der Lenkung und insbesondere des Lenkgetriebes erhalten oder ermitteln. In ersterem Fall können die Bewegungsgrößen sensorisch erfasst werden. Zum Ermitteln kann auf diese Bewegungsgrößen mittelbar geschlossen werden, z.B. anhand einer Winkelstellung und/oder einer Drehzahl des Fahrzeuglenkaktors, wenn ein Übersetzungsverhältnis zwischen Aktor und dem Lenkgetriebe (beispielsweise einer optionalen Zahnstange hiervon) bekannt ist.

Mit einer Rückstellfunktion erzeugte Steuergrößen können von dem Steuergerät an den Aktor und insbesondere an eine Steuereinrichtung hiervon ausgegeben werden. Beispielsweise können nach Maßgabe der Steuergrößen elektrische Leistungszufuhren des Fahrzeuglenkaktors von dessen Steuereinrichtung angepasst werden, um nach Maßgabe der vorliegenden Steuergrößen Kräfte zu erzeugen und insbesondere das Lenkgetriebe hierdurch zu bewegen.

Um auf Basis der Steuergröße mit dem Fahrzeuglenkaktor eine Kraft zu erzeugen, mit der das Lenkgetriebe auch bei unterschrittener Grenzdistanz (also im Endanschlagsbereich) in eine definierte Position rückstellbar ist, liegt die Steuergröße bevorzugt oberhalb eines Schwellenwertes. Dieser kann experimentell, per Simulation und/oder per Berechnung ermittelt werden. Er kann derart festgelegt sein, dass die Steuergröße den Fahrzeuglenkaktor zum Erzeugen von Kräften ansteuert, die auf das Lenkgetriebe z.B. durch die Fahrzeugräder ausgeübte lenkwirksame Kräfte ausgleichen oder übersteigen. Es ist aber nicht zwingend erforderlich, dass allein mit der ersten Steuergröße im Endanschlagbereich eine rückstellende Wirkung erzielbar ist. Stattdessen kann auf Basis dieser Steuergröße lediglich ein Anteil einer Kraft erzeugt werden, um z.B. gemeinsam mit der erwähnten Normalbetriebs-Rückstellfunktion sowie einer hiervon ermittelten Steuergröße die rückstellende Kraft erzeugen.

Weiter ist vorgesehen, dass eine zusätzliche Bedingung zum Ansteuern des Fahrzeuglenkaktors auf Basis der Endanschlags-Rückstellfunktion (bzw. auf Basis der hiervon ermittelten ersten Steuergröße) ermittelt wird, ob ein betriebszustandsabhängiges Kriterium eines das Lenkgetriebe umfassenden Fahrzeugs erfüllt ist. Dabei ist das vorstehend diskutierte betriebszustandsabhängige Kriterium eine Parkfunktion. Genauer gesagt kann dann, wenn eine fahrerautonome Parkfunktion (oder auch Einparkfunktion) aktiviert ist, das Ansteuern des Fahrzeuglenkaktors auf Basis der (bzw. durch die) Endanschlags-Rückstellfunktion zumindest temporär deaktiviert werden und/oder das betriebszustandabhängige Kriterium nicht erfüllt sein. Dem liegt der Gedanke zugrunde, dass die fahrerautonome Parkfunktion nicht etwaige von der Endanschlags-Rückstellfunktion erzeugte Kräfte überwinden müssen sollte. So ist es im Rahmen der fahrerautonomen Parkfunktion unerheblich, welches etwaige Lenkgefühl sich einstellt, insbesondere wenn es sich um einen sogenannten freihändigen Parkassistenten (hands-off-Parkassistenten) handelt, bei dem der Fahrer die Lenkhandhabe nicht betätigt. Hingegen kann dann, wenn die fahrerautonome Parkfunktion unterbrochen wird, beispielweise da der Fahrer die Lenkhandhabe greift, die Endanschlags-Rückstellfunktionen wieder selektiv zugeschaltet werden. Dies ermöglicht einen bedarfsgerechten Einsatz der Endanschlags-Rückstellfunktion und ein vereinfachtes Auslegen der fahrerautonomen Parkfunktion z.B. über eine Vielzahl unterschiedlicher Fahrzeugtypen hinweg, ohne dass diese an nur für spezifische Fahrzeug- bzw. Lenkungsvarianten vorgesehene Endanschlags-Rückstellfunktionen angepasst werden muss.

Ein zusätzliches betriebszustandsabhängiges Kriterium kann ein Nicht-Überschreiten eines Grenzwertes durch eine Fahrzeuggeschwindigkeit sein. Nur wenn die Fahrzeuggeschwindigkeit entsprechend niedrig ist, kann der Fahrzeuglenkaktor durch die Endanschlags-Rückstellfunktion bzw. deren ermittelter erster Steuergröße angesteuert werden. Genauer gesagt kann nur dann mit der Endanschlags-Rückstellfunktion eine erste Steuergröße ermittelt werden, die in der geschilderten Weise einen Wert oberhalb des Schwellenwertes aufweist. Oberhalb des Grenzwertes der Fahrzeuggeschwindigkeit kann dann wiederum keine Steuergröße mit der Endanschlags-Rückstellfunktion ermittelt werden oder lediglich eine Steuergröße mit einem den Schwellenwert nicht überschreitenden Wert.

Diese Ausführungsform konkretisiert das Einsatzszenario der Endanschlags-Rückstellfunktion zusätzlich und begrenzt es auf einen Bereich, in dem eine herkömmliche Normalbetriebs-Rückstellfunktion erwartungsgemäß keine ausreichenden Rückstellkräfte erzeugen wird. Eine Erkenntnis der Erfindung liegt darin, dass die mangelnde selbstlenkende Wirkung eines Lenkgetriebes bei speziellen Bauarten primär dann auftritt, wenn sich die Lenkung im Endanschlagsbereich befindet, aber auch gleichzeitig geringe Fahrgeschwindigkeiten vorliegen. Mit der Endanschlags-Rückstellfunktion, die nur bei entsprechend geringen Fahrgeschwindigkeiten eingesetzt wird, kann also sichergestellt werden, dass besonders bedarfsgerecht zusätzliche Rückstellkräfte erzeugbar sind.

Ein weiteres betriebszustandsabhängiges Kriterium, das zusätzlich oder alternativ vorgesehen sein kann, betrifft das Aktivieren von Assistenzfunktionen. Insbesondere bei zumindest teilweise fahrerautonomen Assistenzfunktionen und ferner insbesondere bei solchen, die einen (Fahr-) Betrieb des Fahrzeugs zumindest teilweise autonom steuern, können die Anforderungen an das exakte Einstellen eines gewünschten Lenkgefühls geringer ausfallen. Entsprechend kann dann, wenn diese Assistenzfunktionen den Betrieb und insbesondere ein Lenken des Fahrzeugs zumindest anteilig steuern, darauf verzichtet werden, mit der Endanschlags-Rückstellfunktion signifikante Kräfte zu erzeugen.

Wie erwähnt, sieht eine bevorzugte Weiterbildung vor, dass zusätzlich eine (bevorzugt herkömmliche) Normalbetriebs-Rückstellfunktion bereitgestellt ist. Mit dieser kann unabhängig von dem Unterschreiten der Grenzdistanz eine zweite Steuergröße für den Fahrzeuglenkaktor ermittelbar sein. Mittels dieser Steuergröße kann der Fahrzeuglenkaktor veranlasst werden, zumindest anteilig eine das Lenkgetriebe in eine definierte Position rückstellende Kraft zu erzeugen. Bei Überschreiten der Grenzdistanz zum Endanschlag kann diese Kraft vorzugsweise zum Erzielen der rückstellenden Wirkung alleinig ausreichen. Während des Unterschreitens der Grenzdistanz wird vorzugsweise eine derartige Kraft erzeugt, die in Summe mit einer nach Maßgabe der ersten Steuergröße der Endanschlags-Rückstellfunktion erzeugen Kraft gemeinsam eine ausreichende rückstellende Wirkung entfaltet.

Entsprechend ist in diesem Zusammenhang bevorzugt vorgesehen, dass der Fahrzeuglenkaktor bei einem Unterschreiten der Grenzdistanz sowohl auf Basis der ersten als auch der zweiten Steuergröße angesteuert wird. Allgemein wird also ein Betrieb der Normalbetriebs-Rückstellfunktion auch im Endanschlagsbereich (d.h. bei Unterschreiten der Grenzdistanz) aufrechterhalten. Die Endanschlags-Rückstellfunktion erzeugt hingegen bevorzugt nur selektiv im Endanschlagsbereich zusätzliche Rückstellkräfte, um auf die Besonderheiten einer spezifischen Fahrzeuglenkung und insbesondere deren mangelnde Selbstlenkung im Endanschlagsbereich Rücksicht zu nehmen.

In diesem Zusammenhang kann vorgesehen sein, dass die Endanschlags-Rückstellfunktion und die Normalbetriebs-Rückstellfunktion jeweils kennlinienbasiert sind. Die Kennlinien können voneinander abweichen. In an sich bekannter Weise können die Kennlinien Werte der jeweiligen Steuergrößen in Abhängigkeit einer Bewegungsgröße definieren. Die Bewegungsgröße kann eine Bewegungsgröße des Lenkgetriebes und insbesondere einer optionalen Zahnstange hiervon sein.

Beispielsweise kann vorgesehen sein, dass die Kennlinien der genannten Rückstellfunktionen unterschiedliche Verläufe aufweisen. Bevorzugt ist die Endanschlags-Rückstellfunktion (auch unabhängig von ihrem Verhältnis zur Kennlinie der Normalbetriebs-Rückstellfunktion) nicht linear. Besonders bevorzugt weist sie einen progressiven und/oder exponentiellen Verlauf auf.

Das Verwenden von Kennlinien ermöglicht das bedarfsgerechte Bereitstellen von Rückstellkräften. Das Verwenden unterschiedlicher Kennlinien ermöglicht, dass die Endanschlags- und Normalbetriebs-Rückstellfunktion an ihre jeweiligen (Haupt-) Einsatzszenarien gezielt anpassbar sind.

Eine Weiterbildung sieht vor, dass der Fahrzeuglenkaktor auch auf Basis einer dritten Steuergröße ansteuerbar ist, die von einer Lenkkraftunterstützungsfunktion erzeugt wird. In an sich bekannter Weise kann die Lenkkraftunterstützungsfunktion dazu dienen, eine den Fahrer unterstützende Kraft auf das Lenkgetriebe auszuüben, um eine von ihm gewünschte Lenkung umzusetzen.

In diesem Zusammenhang ist vorzugsweise vorgesehen, dass auf Basis der dritten Steuergröße eine erste maximale Kraft erzeugbar ist (beispielsweise für einen Normalbetrieb außerhalb eines Endanschlagbereichs).

Zusätzlich oder alternativ kann bei Unterschreiten der Grenzdistanz und zum (manuellen) Überlenken der Endanschlags-Rückstellfunktion auf Basis der dritten Steuergröße auch eine zweite maximale Kraft erzeugbar sein. Diese kann also auf den Endanschlagsbereich begrenzt sein. Bevorzugt entspricht diese zweite maximale Kraft zumindest der Summe aus (bevorzugt den Beträgen) der ersten maximalen Kraft und einer auf Basis der ersten Steuergröße erzeugten rückstellenden Kraft. Dies gewährleistet eine zuverlässige Überlenkbarkeit der fahrerautonom erzeugten Kräfte im Endanschlagsbereich. Insbesondere richtet sich dies auf dasjenige Szenario, dass der Fahrer zunächst im Endanschlagbereich maximal rückstellend lenkt und dabei auch von der Endanschlags-Rückstellfunktion eine maximale rückstellende Kraft erzeugt wird. Wenn der Fahrer dann aber spontan gegenlenken möchte, muss er also die bis dahin wirksamen fahrerautonom erzeugten Lenkkräfte wieder überlenken können. Dies wird durch die obige Ausführungsform sichergestellt und hierdurch wird die Fahrsicherheit und allgemein die Kontrollierbarkeit des Lenksystems aus Sicht des Fahrers verbessert.

Gemäß einer Weiterbildung wird eine Überwachungsfunktion bereitgestellt, mit der die erste Steuergröße hinsichtlich wenigstens eines Kriteriums überprüfbar ist. Die Überwachungsfunktion kann wiederum als die Funktion eines Steuergeräts bereitgestellt sein, also beispielsweise allgemein rechnerbasiert und/oder computergestützt ausgeführt werden. Die Überwachungsfunktion ist bevorzugt dazu eingerichtet, bei Verletzen (d.h. Nichterfüllen) des Kriteriums ein Ansteuern des Fahrzeuglenkaktors auf Basis der ersten Steuergröße zu unterbinden. Insbesondere kann das Überwachungskriterium also sicherstellen, dass ausschließlich situationsgerechte Werte der ersten Steuergröße ausgegeben und tatsächlich zum Ansteuern des Fahrzeuglenkaktors verwendet werden. Hierfür kann sie z.B. eine Art Plausibilitätsüberprüfung durchführen oder aber das Einhalten von Sicherheitsgrenzen sicherstellen.

Insbesondere kann vorgesehen sein, dass das von der Überwachungsfunktion überprüfte Kriterium zulässige Werte der Steuergröße in Abhängigkeit einer Bewegungsgröße des Lenkgetriebes definiert (insbesondere einer etwaigen Zahnstange hiervon oder eines anderen bewegbaren Getriebeglieds). Beispielsweise kann die Überwachungsfunktion vorgeben, dass erst ab einer Mindestbewegung des Lenkgetriebes aus dessen Neutralstellung (z.B. bei einem Zurücklegen von wenigstens 50 % der maximalen Strecke zwischen Neutralstellung und einem Endanschlag) die Steuergröße einen Wert oberhalb des erwähnten Schwellenwertes aufweisen darf. Anschließend kann der aus Sicht der Überwachungsfunktion zulässige Wert der Steuergröße mit zunehmendem Verlagerungsweg des Lenkgetriebes steigen. Insbesondere kann er linear auf einen Maximalwert zunehmen. Letzterer kann einem Wert der Steuergröße entsprechen, mit dem eine Kraft durch den Fahrzeuglenkaktor von z.B. bis zu 4 kN erzeugbar ist.

Durch Verwenden der geschilderten Überwachungsfunktion wird eine zusätzliche Sicherheitsebene bereitgestellt, um sicherzustellen, dass die mittels der Endanschlags-Rückstellfunktion fahrerautonom erzeugten Lenkkräfte tatsächlich für einen aktuellen Betriebszustand angemessen sind.

Die Erfindung betrifft auch ein Steuergerät zum Ansteuern eines Fahrzeuglenkaktors, der mit einem Lenkgetriebe gekoppelt ist, wobei das (allgemein digitale und/oder elektronisch betreibbare) Steuergerät eine Endanschlags-Rückstellfunktion umfasst, mit der wenigstens eine erste Steuergröße für den Fahrzeuglenkaktor ermittelbar ist, auf deren Basis mit dem Fahrzeuglenkaktor eine das Lenkgetriebe in Richtung einer definierten Position rückstellende Kraft erzeugbar ist, wobei das Steuergerät dazu eingerichtet ist, zu ermitteln, ob das Lenkgetriebe eine Grenzdistanz zu einem Endanschlag unterschreitet; und wenn dies der Fall ist, den Fahrzeuglenkaktor auf Basis der mit der Endanschlags-Rückstellfunktion ermittelten ersten Steuergröße anzusteuern, die einen Wert oberhalb eines Schwellenwerts aufweist; wobei das Steuergerät ferner dazu eingerichtet ist, dann, wenn die Grenzdistanz nicht unterschritten wird, keine Steuergröße mit der Endanschlags-Rückstellfunktion zu ermitteln oder eine Steuergröße mit einem den Schwellenwert nicht überschreitenden Wert. Dabei ist das Steuergerät weiter derart ausgebildet, dass als zusätzliche Bedingung zu dem Ansteuern des Fahrzeuglenkaktors auf Basis der Endanschlags-Rückstellfunktion ermittelt wird, ob ein betriebszustandsabhängiges Kriterium eines das Lenkgetriebe umfassenden Fahrzeugs erfüllt ist, wobei als betriebszustandsabhängiges Kriterium ein Nicht-Aktivieren eines zumindest teilweise fahrerautonomen Parkfunktion definiert ist.

Das Steuergerät kann wenigstens eine Prozessoreinrichtung und/oder wenigstens eine Speichereinrichtung umfassen. Auf der Speichereinrichtung können Programmanweisungen hinterlegt sein, die bei Ausführung durch die Prozessoreinrichtung das Steuergerät zu jeglicher hierin geschilderten Funktion und/oder Maßnahme veranlassen. Allgemein kann das Steuergerät ein Verfahren gemäß jeglichen der hierin erwähnten Aspekte ausführen. Hierfür kann das Steuergerät sämtliche weitere Merkmale und Funktionen aufweisen, um ein solches Verfahren bereitzustellen. Insbesondere können sämtliche Ausführungen zu und Weiterbildungen von Verfahrensmerkmalen auf die gleichlautenden Merkmale des Steuergeräts ebenso zutreffen bzw. bei diesen vorgesehen sein.

Allgemein versteht sich, dass das Fahrzeug zwei Endanschläge bzw. Endanschlagsbereiche für beide Lenkrichtungen aufweisen kann. Die Erfindung kann bei beiden Endanschlägen bzw. Endanschlagsbereichen gleichermaßen eingesetzt werden und funktionieren. Ausführungsbeispiele der Erfindung werden im Folgenden anhand der beigefügten schematischen Figuren erläutert:
- Fig. 1: zeigt eine schematische Darstellung eines Fahrzeuglenksystems mit einem Steuergerät gemäß einem Ausführungsbeispiel der Erfindung, das ein Verfahren gemäß einem Ausführungsbeispiel der Erfindung ausführt.
- Fig. 2: zeigt ein Ablaufschema des Verfahrens aus Fig. 1.

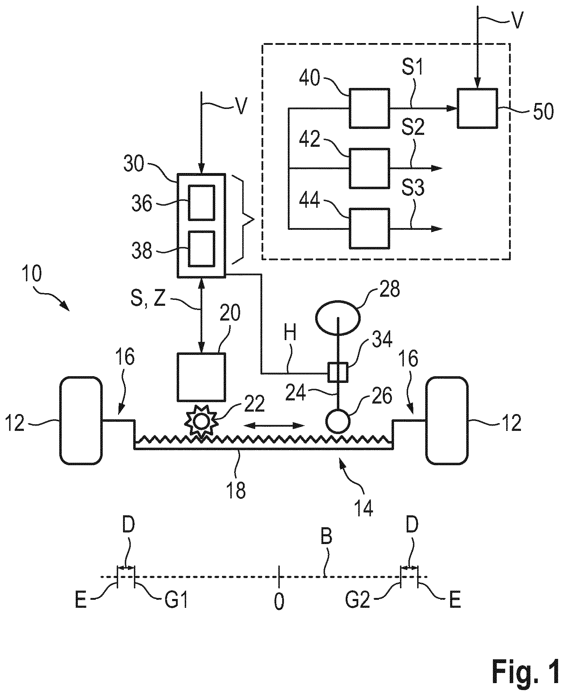

In Fig. 1 ist ein schematisches Fahrzeuglenksystem 10 gezeigt. Hierbei handelt es sich um eine Vorderachs-Lenkung eines Personenkraftwagens. Angedeutet sind zwei Vorderräder 12, die über ein Lenkgetriebe 14 auslenkbar sind. Hierfür sind die Räder 12 über nicht näher dargestellte Verbindungsglieder 16 mit einer Zahnstange 18 des Lenkgetriebes 14 verbunden. Die Zahnstange 18 ist, wie durch einen Doppelpfeil angedeutet, linear verlagerbar. Diese lineare Verlagerung kann in an sich bekannter Weise über die Verbindungsglieder 16 in eine Rotationsbewegung der Räder 12 um eine in Fig. 1 vertikale Achse umgesetzt werden.

Das Lenksystem 10 umfasst auch einen Fahrzeuglenkaktor 20. Dieser ist in Form eines Elektromotors ausgebildet. Der Fahrzeuglenkaktor 20 treibt ein Ritzel 22 an, das in einem Eingriff mit der Zahnstange 18 steht. Ebenfalls in Eingriff mit der Zahnstange 18 steht eine Lenkwelle 24 (beispielsweise über ein schematisch angedeutetes Schneckenrad 26). Die Lenkwelle 24 ist mit einer Lenkhandhabe 28 (einem Lenkrad) verbunden und somit manuell betätigbar. Über die Lenkhandhabe 28 und den Fahrzeuglenkaktor 20 können somit Momente erzeugt werden, die als Kräfte auf die Zahnstange 18 einwirken und genauer gesagt als Verlagerungskräfte gemäß dem dargestellten Doppelpfeil. Folglich handelt es sich bei dem beispielhaft abgebildeten Lenksystem 10 um eine elektromechanische Lenkung.

Gezeigt ist ferner ein Steuergerät 30. Dieses gibt Steuersignale S an den Fahrzeuglenkaktor 20 aus und empfängt von diesem Zustandsparameter Z. Aus den Zustandsparametern können in bekannter Weise Bewegungsgrößen des Lenkgetriebes 14 und insbesondere der Zahnstange 18 ermittelt werden. Beispielsweise kann aus einer Winkelstellung des Ritzels 22 bzw. einer Ausgangswelle des Fahrzeuglenkaktors 20 auf eine Zahnstangenposition entlang deren linearen Bewegungspfad bzw. ihrer linearen Bewegungsachse B geschlossen werden.

In Fig. 1 ist eine Bewegungsachse B der Zahnstange 18 angedeutet. Entlang dieser kann die Zahnstange 18 linear verlagert werden. Gezeigt ist eine Neutralstellung null. Überdeckt ein Mittelpunkt der Zahnstange 18 die Neutralstellung null, ist das Lenkgetriebe 14 nicht ausgelenkt, d.h. findet eine Geradeausfahrt statt. Gezeigt sind ferner Endanschläge E. Bis zu diesen Endanschlägen E, die über nicht gezeigte mechanische Elemente nahe der jeweiligen Verbindungsglieder 16 realisiert sind, sind die in Fig. 1 linken und rechten Endbereiche bzw. Außenbereiche der Zahnstange 18 verlagerbar. Eine weitere Verlagerung über die Endanschläge E in eine von der Neutralstellung null wegführende Richtung wird mechanisch/strukturell unterbunden.

Gezeigt sind zudem softwarebasiert festgelegte Bewegungsgrenzen G1, G2. Werden diese von den jeweiligen Endbereichen der Zahnstange 18 erreicht, ist eine Grenzdistanz D der Zahnstange 18 zu den Endanschlägen E unterschritten. Ob diese Grenzen G1, G2 erreicht sind, kann wiederum von dem Steuergerät 30 anhand einer Zahnstangenposition, die aus den Zustandsparametern Z gewonnen wird, ermittelt werden.

Das Steuergerät 30 ist auch mit einem Handmomentensensor 34 verbunden. Hierüber erhält das Steuergerät 30 Informationen zu einem aktuell aufgebrachten Handmoment H.

Als Bestandteile des Steuergeräts sind ferner eine Prozessoreinrichtung 36 und eine Speichereinrichtung 38 gezeigt. Auf der Speichereinrichtung 38 sind Programmanweisungen hinterlegt, die von der Prozessoreinrichtung 36 ausgeführt werden. Hierdurch werden die vergrößert in einem strichlierten Rahmen schematisch dargestellten Lenkfunktionen 40-44 ausgeführt. Hierbei handelt es sich um eine nachstehend erläuterte Endanschlags-Rückstellfunktion 40, die eine erste Steuergröße S1 ausgibt. Ferner ist eine Normalbetriebs-Rückstellfunktion 42 vorgesehen, die eine zweite Steuergröße S2 ausgibt. Weiter existiert eine Lenkunterstützungsfunktion 44, die eine dritte Steuergröße S3 ausgibt.

Im gezeigten Beispiel ist vorgesehen, dass sämtliche der Lenkfunktionen 40-44 parallel betrieben werden, also auch fortlaufend bzw. gleichzeitig ihre Steuergrößen S1-S3 ausgeben. Diese werden dann zur insgesamt an den Fahrzeuglenkaktor 20 ausgegebenen Steuergröße bzw. dem Steuersignal S addiert. Die Steuergröße S veranlasst den Fahrzeuglenkaktor 20 dazu, eine Kraft auf die Zahnstange 18 über eine Rotation des Ritzels 22 aufzubringen, sodass diese in einer gewünschten Weise entlang der Bewegungsachse B verlagert wird. Insbesondere kann es sich also bei den Steuergrößen S1-S3 oder zumindest der Steuergröße S um Zahnstangensollkräfte handeln, die von dem Fahrzeuglenkaktor 20 aufzubringen sind. Alternativ könnten auch eine solche Zahnstangensollkraft repräsentierende elektrische Größen als Steuergröße S bzw. Steuergrößen S1-S3 vorgesehen sein, wobei diese elektrischen Größen z.B. Betriebsgrößen einer Leistungszufuhr (z.B. eines Stromrichters) des Fahrzeuglenkaktors 20 sind, mit denen eine gewünschte Zahnstangensollkraft einstellbar ist.

Die Steuergröße S bzw. die Steuergrößen S1-S3 zeichnen sich somit jeweils durch einen Wert aus. Dieser ist vorzugsweise auch vorzeichenbehaftet, um vorzugeben, ob die Zahnstange 18 in Fig. 1 nach links oder nach rechts bewegt werden soll, also in welche Richtung gelenkt werden soll. Dabei geben die Rückstellfunktionen 40, 42 allgemein Steuergrößen S1, S2 bzw. Kräfte vor, die die Zahnstange 18 bzw. deren Mittelpunkt wieder in Richtung der Neutralstellung 0 verlagern. In Kenntnis der aktuellen Zahnstangenposition, die von dem Steuergerät 30 an die Funktionen 40, 42 übermittelt werden, können die Vorzeichen der Steuergrößen S1, S2 bzw. der hiermit zu erzeugenden Kräfte hierfür geeignet festgelegt werden.

Die Lenkunterstützungsfunktion 44 erzeugt hingegen eine Kraftkomponente, die in Richtung einer vom Fahrer über die Lenkhandhabe 28 vorgegebene Zahnstangenbewegung wirkt. Das Vorzeichen der entsprechenden Steuergröße S3 bzw. eine auf deren Basis erzeugten Kraft kann gemäß der erhaltenen Handmomente H gewählt werden.

Das Steuergerät 30 arbeitet im gezeigten Beispiel wie folgt: Während des Betriebs des Lenksystems 10 wird, sobald eine Auslenkung aus der Neutralstellung 0 der Zahnstange 18 vorliegt, kontinuierlich mit der Normalbetriebs-Rückstellfunktion 42 eine Rückstellkraft ermittelt bzw. über die Steuergröße S2 ausgegeben. Diese Rückstellkraft S2 bestimmt als eine Kraftkomponente anteilig die vom Fahrzeuglenkaktor 20 auf die Zahnstange 18 aufgebrachten Kräfte und bestimmt somit auch das vom Fahrer an der mit der Zahnstange 18 gekoppelten Lenkhandhabe 28 wahrnehmbare Lenkgefühl. Bringt der Fahrer zusätzlich ein Handmoment H auf, erzeugt die Lenkunterstützungsfunktion 44 die Steuergröße S3, mit der eine in Richtung des Fahrerwunsches wirkende Kraftkomponente durch den Fahrzeuglenkaktor 20 erzeugbar ist.

Gelangt die Zahnstange 18 nun in einen Endanschlagsbereich durch Überschreiten der Grenzen G1, G2 (d.h. Unterschreiten der Grenzdistanz D zu einem der Endanschläge E), wird mit der Endanschlags-Rückstellfunktion 40 die erste Steuergröße S1 derart ermittelt und ausgegeben, dass eine zusätzliche rückstellende Kraftkomponente (zusätzlich zur Normalbetriebs-Rückstellfunktion 42) erzeugbar ist. Vorzugsweise ist die Endanschlags-Rückstellfunktion 40 auch vor dem Erreichen der Grenzen G1, G2 in Betrieb, gibt bis dahin aber eine Steuergröße S1 mit dem Wert null aus bzw. eine Steuergröße S1, die eine Kraftkomponente mit dem Wert null erzeugt. Ob die Grenze G1, G2 überschritten wurde, kann wiederum durch das Steuergerät 30 und/oder die Endanschlags-Rückstellfunktion 40 ermittelt werden.

Nicht gesondert gezeigt ist, dass jegliche der Lenkfunktionen 40-44 kennlinienbasiert arbeiten können. In Abhängigkeit einer aktuellen Bewegungsgröße des Lenkgetriebes 14, wobei es sich insbesondere um eine Zahnstangenposition 18 handeln kann, können über diese Kennlinien die jeweiligen Werte der Steuergrößen S1-S3 festgelegt werden. Im Fall der Endanschlags-Rückstellfunktion 40 definiert diese Kenngröße bis zum Erreichen der Grenzen G1, G2 vorzugsweise einen Wert von null. Anschließend kann sie progressiv und/oder exponentiell ansteigen.

Ferner angedeutet ist auch eine optionale Überwachungsfunktion 50. Diese kann den Wert der Steuergröße S1 von der Endanschlags-Rückstellfunktion 40 erhalten und hinsichtlich vorbestimmter und im allgemeinen Beschreibungsteil erläuterter Kriterien überprüfen. Nur wenn diese Kriterien erfüllt sind, kann die Steuergröße S1 als Bestandteil (z.B. als Summand) der Steuergröße S an den Fahrzeuglenkaktor 20 ausgegeben werden.

Als ferner bevorzugtes Merkmal ist vorgesehen, dass zumindest eine von Steuergerät 30 und Überwachungsfunktion 50 auch eine Information betreffend eine aktuelle Fahrgeschwindigkeit V erhält. Diese kann z.B. über gewöhnliche Geschwindigkeitssensoren des Fahrzeugs (nicht dargestellt) oder allgemein über einen Kommunikationsbus des Fahrzeugs (ebenfalls nicht dargestellt) erhalten werden. Nur dann, wenn die Geschwindigkeit V unterhalb eines Schwellenwertes von z.B. weniger als 10 km/h oder aber weniger als 5 km/h liegt, kann die Steuergröße S1 von der Überwachungsfunktion 50 als zulässig bewertet werden. Anders ausgedrückt kann das Nichtüberschreiten einer entsprechenden Grenzgeschwindigkeit ein von der Überwachungsfunktion 50 überprüftes Kriterium sein. Alternativ oder zusätzlich kann das Steuergerät 30 oder kann die Endanschlags-Rückstellfunktion selbst überprüfen, ob die Grenzgeschwindigkeit eingehalten wird. Ist dies nicht der Fall, kann keine erste Steuergröße S1 ausgegeben werden oder aber der Wert der Steuergröße S1 kann auf null gesetzt werden. Folglich ist es auch möglich, dass die Endanschlags-Rückstellfunktion 40 ein Kennfeld umfasst, in dem zusätzlich zu der vorstehend erläuterten Bewegungsgrößen-Steuergrößen-Kennlinie als eine weitere Achse bzw. als ein weiterer Parameter die Geschwindigkeit V einfließt.

Mit dem geschilderte Ausführungsbeispiel wird sichergestellt, dass auch bei im Endanschlagsbereich gegebenenfalls nicht vollständig selbstlenkenden Lenkungen eine ausreichende Rückstellwirkung erzielbar ist. Hierfür muss die Normalbetriebs-Rückstellfunktion 42 nicht gesondert angepasst werden. Insbesondere kann eine Kennlinie diese Normalbetriebs-Rückstellfunktion selbst bei Überschreiten der Grenzen G1, G2 einen stetigen Verlauf beibehalten. Sie muss nicht sprunghaft ansteigen, um eine mangelnde selbstlenkende Wirkung des Lenksystems 10 zu kompensieren. Stattdessen kann ein solcher zusätzlicher Kompensations-Kraftbetrag von der Endanschlags-Rückstellfunktion 40 bereitgestellt werden. Dies ermöglicht eine Funktionstrennung zwischen den Rückstellfunktionen 40, 42, die für ihre jeweiligen Betriebsszenarien gesondert optimiert werden können.

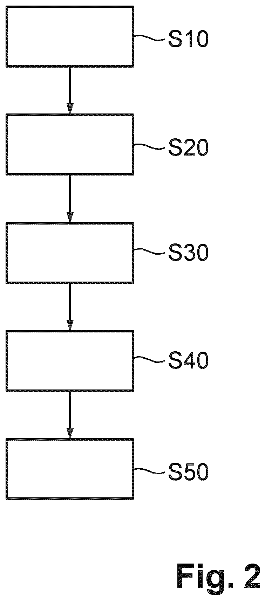

In Fig. 2 ist ein Ablaufschema des vorstehend geschilderten Verfahrens gezeigt. In einem Schritt S10 wird ermittelt, dass die Zahnstange 18 die Grenzdistanz D zu einem der Endanschläge E unterschreitet, sich also im Endanschlagsbereich befindet bzw. einem mechanischen Endanschlag E annähert. In einem Schritt S20, der auch vor Schritt S10 oder gleichzeitig hierzu ausgeführt werden kann, wird ermittelt, dass das Fahrzeug aktuell eine Fahrgeschwindigkeit V unterhalb einem vorbestimmten Grenzwert aufweist. In einem Schritt S30 gibt die Endanschlags-Rückstellfunktion 40 daraufhin eine Steuergröße S1 aus. Diese kann in einem optionalen Schritt S40 von der Überwachungsfunktion 50 auf deren Zulässigkeit überprüft werden. In einem Schritt S50 wird die Steuergröße S1 unter etwaiger Addition zu anderen Steuergrößen und insbesondere den Steuergrößen S2 und S3 an den Fahrzeuglenkaktor 20 ausgegeben. Dieser treibt darauf basierend das Ritzel 22 an und verstellt somit im Schritt S50 die Zahnstange 18 entlang der Bewegungsachse B nach Maßgabe der Steuergröße S. Sobald dies dazu führt, dass die Grenzdistanz D wieder eingehalten ist, wird von der Endanschlags-Rückstellfunktion 40 keine Steuergröße S1 erzeugt, mit der eine Verlagerung der Zahnstange 18 möglich ist. Etwaige das Lenkgefühl prägende Rückstellkräfte werden dann aber nach wie vor von der Normalbetriebs-Rückstellfunktion 42 erzeugt.

### Bezugszeichenliste

- 10: Lenksystem
- 12: Vorderrad
- 14: Lenkgetriebe
- 16: Verbindungsglied
- 18: Zahnstange
- 20: Fahrzeuglenkaktor
- 22: Ritzel
- 24: Lenkwelle
- 26: Schneckenrad
- 28: Lenkhandhabe
- 30: Steuergerät
- 34: Handmomentensensor
- 36: Prozessoreinrichtung
- 38: Speichereinrichtung
- 40: Endanschlags-Rückstellfunktion
- 42: Normalbetriebs-Rückstellfunktion
- 44: Lenkunterstützungsfunktion
- 50: Überwachungsfunktion
- S1-S3: erste bis dritte Steuergröße
- S: (kumulierte) Steuergröße/Steuersignal
- Z: Zustandsparameter
- H: Handmoment
- D: Grenzdistanz
- G1, G2: Grenze
- E: Endanschlag
- B: Bewegungsachse
- 0: neutrale Position/Nullstellung

## Patentansprüche

1. Verfahren zum Ansteuern eines Fahrzeuglenkaktors (20), der mit einem Lenkgetriebe (14) gekoppelt ist, mit:
- Bereitstellen einer Endanschlags-Rückstellfunktion (40), mit der eine erste Steuergröße (S1) für den Fahrzeuglenkaktor (20) ermittelbar ist, auf deren Basis mit dem Fahrzeuglenkaktor (20) eine das Lenkgetriebe (14) in Richtung einer definierten Position (0) rückstellende Kraft zumindest anteilig erzeugbar ist;
- Ermitteln, ob das Lenkgetriebe (14) eine Grenzdistanz (D) zu einem Endanschlag (E) unterschreitet;
und wenn dies der Fall ist:
- Ansteuern des Fahrzeuglenkaktors (20) auf Basis der mit der Endanschlags-Rückstellfunktion (40) ermittelten ersten Steuergröße (S1), die einen Wert oberhalb eines Schwellenwerts aufweist;
wobei dann, wenn die Grenzdistanz (D) nicht unterschritten wird, keine Steuergröße (S1) mit der Endanschlags-Rückstellfunktion (40) ermittelt wird oder eine Steuergröße(S1) mit einem den Schwellenwert nicht überschreitenden Wert,
wobei als zusätzliche Bedingung zu dem Ansteuern des Fahrzeuglenkaktors (20) auf Basis der Endanschlags-Rückstellfunktion (40) ermittelt wird, ob ein betriebszustandsabhängiges Kriterium eines das Lenkgetriebe (14) umfassenden Fahrzeugs erfüllt ist,
**dadurch gekennzeichnet, dass**
als betriebszustandsabhängiges Kriterium ein Nicht-Aktivieren einer zumindest teilweise fahrerautonomen Parkfunktion definiert ist.

2. Verfahren nach Anspruch 1, **dadurch gekennzeichnet, dass** der Schwellenwert null ist.

3. Verfahren nach Anspruch 1 oder 2, **dadurch gekennzeichnet, dass** ein zusätzliches betriebszustandsabhängiges Kriterium ein Nicht-Überschreiten eines Grenzwertes durch eine Fahrzeuggeschwindigkeit ist.

4. Verfahren nach einem der vorangehenden Ansprüche, **dadurch gekennzeichnet, dass** zusätzlich eine Normalbetriebs-Rückstellfunktion (42) bereitgestellt ist, mit der unabhängig vom Unterschreiten der Grenzdistanz (D) eine zweite Steuergröße (S2) für den Fahrzeuglenkaktor (20) ermittelbar ist, auf deren Basis mit dem Fahrzeuglenkaktor (20) zumindest anteilig eine das Lenkgetriebe (14) in die definierte Position (0) rückstellende Kraft erzeugbar ist;
und Ansteuern des Fahrzeuglenkaktors (20) bei einem Unterschreiten der Grenzdistanz (D) sowohl auf Basis der ersten als auch der zweiten Steuergröße (S1, S2).

5. Verfahren nach Anspruch 4, **dadurch gekennzeichnet, dass** die Endanschlags-Rückstellfunktion (40) und die Normalbetriebs-Rückstellfunktion (42) voneinander abweichende Kennlinien umfassen, wobei die Kennlinien Werte der jeweiligen Steuergrößen (S1, S2) in Abhängigkeit einer Bewegungsgröße definieren.

6. Verfahren nach einem der vorangehenden Ansprüche, **dadurch gekennzeichnet, dass** der Fahrzeuglenkaktor (20) auch auf Basis einer dritten Steuergröße (S3) von einer Lenkkraftunterstützungsfunktion (44) ansteuerbar ist, wobei auf Basis der dritten Steuergröße (S3) eine erste maximale Kraft und bei Unterschreiten der Grenzdistanz (D) eine zweite maximale Kraft erzeugbar ist, deren Betrag wenigstens der Summe aus der ersten maximalen Kraft und einer auf Basis zumindest der ersten Steuergröße (S1) erzeugbaren maximalen rückstellenden Kraft entspricht.

7. Verfahren nach einem der vorangehenden Ansprüche, **gekennzeichnet durch** Bereitstellen einer Überwachungsfunktion (50), mit der die erste Steuergröße (S1) hinsichtlich wenigstens eines Kriteriums überprüfbar ist und die eingerichtet ist, bei Verletzen des Kriteriums ein Ansteuern des Fahrzeuglenkaktors (20) auf Basis der ersten Steuergröße (S1) zu unterbinden.

8. Verfahren nach Anspruch 7, **dadurch gekennzeichnet, dass** das Kriterium zulässige Werte der ersten Steuergröße (S1) in Abhängigkeit einer Bewegungsgroße des Lenkgetriebes (14) und/oder der Fahrzeuggeschwindigkeit (V) definiert.

9. Steuergerät (30) zum Ansteuern eines Fahrzeuglenkaktors (20), der mit einem Lenkgetriebe (14) gekoppelt ist,
wobei das Steuergerät (30) eine Endanschlags-Rückstellfunktion (40) umfasst, mit der wenigstens eine erste Steuergröße (S1) für den Fahrzeuglenkaktor (20) ermittelbar ist, auf deren Basis mit dem Fahrzeuglenkaktor (20) eine das Lenkgetriebe (14) in Richtung einer definierten Position (0) rückstellende Kraft zumindest anteilig erzeugbar ist;
wobei das Steuergerät (30) dazu eingerichtet ist, zu ermitteln, ob das Lenkgetriebe (14) eine Grenzdistanz (D) zu einem Endanschlag (E) unterschreitet; und wenn dies der Fall ist, den Fahrzeuglenkaktor (20) auf Basis der mit der Endanschlags-Rückstellfunktion (40) ermittelten ersten Steuergröße (S1) anzusteuern, die einen Wert oberhalb eines Schwellenwerts aufweist;
wobei das Steuergerät (30) ferner dazu eingerichtet ist, dann, wenn die Grenzdistanz (D) nicht unterschritten wird, keine Steuergröße (S1) mit der Endanschlags-Rückstellfunktion (40) zu ermitteln wird oder eine Steuergröße (S1) mit einem den Schwellenwert nicht überschreitenden Wert,
wobei als zusätzliche Bedingung zu dem Ansteuern des Fahrzeuglenkaktors (20) auf Basis der Endanschlags-Rückstellfunktion (40) ermittelt wird, ob ein betriebszustandsabhängiges Kriterium eines das Lenkgetriebe (14) umfassenden Fahrzeugs erfüllt ist,
**dadurch gekennzeichnet, dass**
als betriebszustandsabhängiges Kriterium ein Nicht-Aktivieren einer zumindest teilweise fahrautonomen Parkfunktion definiert ist.

## Claims

1. Method for controlling a vehicle steering actuator (20), which is coupled to a steering gear (14), the method comprising:
- providing an end stop reset function (40) by means of which a first control variable (S1) for the vehicle steering actuator (20) can be determined, on the basis of which a force that resets the steering gear (14) in the direction of a defined position (0) can be at least partially generated by the vehicle steering actuator (20);
- determining whether the steering gear (14) falls below a limit distance (D) from an end stop (E);
and if this is the case:
- controlling the vehicle steering actuator (20) on the basis of the first control variable (S1) determined by the end stop reset function (40), which control variable has a value above a threshold value;
wherein, if the distance does not fall below the limit distance (D), no control variable (S1) is determined by the end stop reset function (40) or a control variable (S1) having a value which does not exceed the threshold value is determined,
wherein, as an additional condition for controlling the vehicle steering actuator (20) on the basis of the end stop reset function (40), it is determined whether an operating-state-dependent criterion of a vehicle comprising the steering gear (14) is met,
**characterized in that**
non-activation of an at least partially driver-autonomous parking function is defined as an operating-state-dependent criterion.

2. Method according to claim 1, **characterized in that** the threshold value is zero.

3. Method according to either claim 1 or 2, **characterized in that** an additional operating-state-dependent criterion is that a vehicle speed does not exceed a limit value.

4. Method according to any of the preceding claims, **characterized in that** a normal operation reset function (42) is additionally provided, by means of which a second control variable (S2) for the vehicle steering actuator (20) can be determined, regardless of falling below the limit distance (D), on the basis of which a force, which at least partially resets the steering gear (14) to the defined position (0), can be generated by the vehicle steering actuator (20);
and controlling the vehicle steering actuator (20) if the distance falls below the limit distance (D), on the basis of both the first and the second control variable (S1, S2).

5. Method according to claim 4, **characterized in that** the end stop reset function (40) and the normal operation reset function (42) comprise characteristic curves which differ from one another, wherein the characteristic curves define values of the relevant control variables (S1, S2) on the basis of a movement variable.

6. Method according to any of the preceding claims, **characterized in that** the vehicle steering actuator (20) can also be controlled by a steering force assistance function (44) on the basis of a third control variable (S3), wherein a first maximum force can be generated on the basis of the third control variable (S3) and, if the distance falls below the limit distance (D), a second maximum force can be generated, the amount of which corresponds at least to the sum of the first maximum force and a maximum restoring force that can be generated on the basis of at least the first control variable (S1).

7. Method according to any of the preceding claims, **characterized by** providing a monitoring function (50) by means of which the first control variable (S1) can be checked with respect to at least one criterion and which is set up to prevent control of the vehicle steering actuator (20) on the basis of the first control variable (S1) if the criterion is contravened.

8. Method according to claim 7, **characterized in that** the criterion defines permissible values of the first control variable (S1) on the basis of a movement variable of the steering gear (14) and/or the vehicle speed (V).

9. Control device (30) for controlling a vehicle steering actuator (20) which is coupled to a steering gear (14),
wherein the control device (30) comprises an end stop reset function (40) by means of which at least one first control variable (S1) for the vehicle steering actuator (20) can be determined, on the basis of which a force that resets the steering gear (14) in the direction of a defined position (0) can be at least partially generated by the vehicle steering actuator (20);
wherein the control device (30) is configured to determine whether the steering gear (14) falls below a limit distance (D) from an end stop (E); and if this is the case, to control the vehicle steering actuator (20) on the basis of the first control variable (S1) determined by the end stop reset function (40), which control variable has a value above a threshold value;
wherein the control device (30) is further configured so that, if the distance does not fall below the limit distance (D), no control variable (S1) is to be determined by the end stop reset function (40) or a control variable (S1) having a value which does not exceed the threshold value is to be determined,
wherein, as an additional condition for controlling the vehicle steering actuator (20) on the basis of the end stop reset function (40), it is determined whether an operating-state-dependent criterion of a vehicle comprising the steering gear (14) is met,
**characterized in that**
non-activation of an at least partially autonomous parking function is defined as an operating-state-dependent criterion.

## Revendications

1. Procédé pour la commande d'un actionneur de direction de véhicule (20), qui est accouplé à un mécanisme de direction (14), comportant :
- la mise à disposition d'une fonction de rappel de butée de fin de course (40) permettant de déterminer une première grandeur de commande (S1) pour l'actionneur de direction de véhicule (20), sur la base de laquelle une force rappelant le mécanisme de direction (14) en direction d'une position définie (0) peut être générée au moins en partie avec l'actionneur de direction de véhicule (20) ;
- la détermination établissant si le mécanisme de direction (14) passe en dessous d'une distance limite (D) par rapport à une butée de fin de course (E) ;
et si c'est le cas :
- la commande de l'actionneur de direction de véhicule (20) sur la base de la première grandeur de commande (S1) déterminée avec la fonction de rappel de butée de fin de course (40), qui présente une valeur supérieure à une valeur seuil ;
dans lequel, lorsque la distance limite (D) n'est pas dépassée vers le bas, aucune grandeur de commande (S1) n'est déterminée avec la fonction de rappel de butée de fin de course (40) ou une grandeur de commande (S1) avec une valeur ne dépassant pas la valeur seuil,
dans lequel, en tant que condition supplémentaire à la commande de l'actionneur de direction de véhicule (20) sur la base de la fonction de rappel de butée de fin de course (40), il est déterminé si un critère dépendant de l'état de fonctionnement d'un véhicule comprenant le mécanisme de direction (14) est satisfait,
**caractérisé en ce**
**qu'**une non-activation d'une fonction de stationnement au moins partiellement autonome par rapport au conducteur est définie comme critère dépendant de l'état de fonctionnement.

2. Procédé selon la revendication 1, **caractérisé en ce que** la valeur seuil est nulle.

3. Procédé selon la revendication 1 ou 2, **caractérisé en ce qu'**un critère supplémentaire dépendant de l'état de fonctionnement est un non-dépassement d'une valeur limite par une vitesse de véhicule.

4. Procédé selon l'une des revendications précédentes, **caractérisé en ce qu'**il est prévu en outre une fonction de rappel en fonctionnement normal (42) qui permet de déterminer, indépendamment du fait que la distance limite (D) est dépassée vers le bas, une deuxième grandeur de commande (S2) pour l'actionneur de direction du véhicule (20), sur la base de laquelle une force de rappel du mécanisme de direction (14) dans la position définie (0) peut être générée au moins en partie avec l'actionneur de direction du véhicule (20) ;
et commander l'actionneur de direction du véhicule (20) lorsque la distance limite (D) est dépassée vers le bas, sur la base aussi bien de la première que de la deuxième grandeur de commande (S1, S2).

5. Procédé selon la revendication 4, **caractérisé en ce que** la fonction de rappel de butée de fin de course (40) et la fonction de rappel en fonctionnement normal (42) comprennent des courbes caractéristiques différentes l'une de l'autre, dans lequel les courbes caractéristiques définissent des valeurs des grandeurs de commande (S1, S2) respectives en fonction d'une grandeur de mouvement.

6. Procédé selon l'une des revendications précédentes,
**caractérisé en ce que** l'actionneur de direction de véhicule (20) peut être commandé également sur la base d'une troisième grandeur de commande (S3) par une fonction d'assistance de force de direction (44), dans lequel une première force maximale peut être générée sur la base de la troisième grandeur de commande (S3) et une deuxième force maximale peut être générée lorsque la distance limite (D) est dépassée vers le bas, la valeur de la deuxième force maximale correspondant au moins à la somme de la première force maximale et d'une force de rappel maximale pouvant être générée sur la base d'au moins la première grandeur de commande (S1).

7. Procédé selon l'une des revendications précédentes, **caractérisé par** la mise à disposition d'une fonction de surveillance (50), avec laquelle la première grandeur de commande (S1) peut être vérifiée en ce qui concerne au moins un critère et qui est conçue, en cas de non-respect du critère, pour empêcher une commande de l'actionneur de direction du véhicule (20) sur la base de la première grandeur de commande (S1).

8. Procédé selon la revendication 7, **caractérisé en ce que** le critère définit des valeurs admissibles de la première grandeur de commande (S1) en fonction d'une grandeur de mouvement du mécanisme de direction (14) et/ou de la vitesse de véhicule (V).

9. Appareil pour la commande (30) pour commander un actionneur de direction de véhicule (20), qui est accouplé à un mécanisme de direction (14),
dans lequel l'appareil de commande (30) comprend une fonction de rappel de butée de fin de course (40) qui permet de déterminer au moins une première grandeur de commande (S1) pour l'actionneur de direction du véhicule (20), sur la base de laquelle une force de rappel du mécanisme de direction (14) en direction d'une position définie (0) peut être générée au moins en partie avec l'actionneur de direction de véhicule (20) ;
dans lequel l'appareil de commande (30) est conçu pour déterminer si le mécanisme de direction (14) passe en dessous d'une distance limite (D) par rapport à une butée de fin de course (E) ; et si c'est le cas, pour commander l'actionneur de direction de véhicule (20) sur la base de la première grandeur de commande (S1) déterminée avec la fonction de rappel de butée de fin de course (40), laquelle présente une valeur supérieure à une valeur seuil ;
dans lequel l'appareil de commande (30) est en outre conçu pour, lorsque la distance limite (D) n'est pas dépassée vers le bas, ne pas déterminer de grandeur de commande (S1) avec la fonction de rappel de butée de fin de course (40) ou déterminer une grandeur de commande (S1) avec une valeur ne dépassant pas la valeur seuil,
dans lequel, en tant que condition supplémentaire à la commande de l'actionneur de direction de véhicule (20) sur la base de la fonction de rappel de butée de fin de course (40), il est déterminé si un critère dépendant de l'état de fonctionnement d'un véhicule comprenant le mécanisme de direction (14) est satisfait,
**caractérisé en ce**
**qu'**une non-activation d'une fonction de stationnement au moins partiellement autonome par rapport à la conduite est définie comme critère dépendant de l'état de fonctionnement.
